# EUROPÄISCHE PATENTSCHRIFT

(11) **EP 1 691 225 B1**
(45) Veröffentlichungstag und Bekanntmachung des Hinweises auf die Patenterteilung: **03.10.2012**
(21) Anmeldenummer: 05026790.5
(22) Anmeldetag: 08.12.2005
(51) Int. Cl.: G02B 6/44

(54) **Markierung von Glasfasern zur Identifizierung**
Marking of optical fibers for identification
Marquage de fibres optiques pour l'identification

(30) Priorität: 11.02.2005 DE 102005006318
(43) Veröffentlichungstag der Anmeldung: 16.08.2006
(73) Patentinhaber: Deutsche Telekom AG, 53113 Bonn (DE)
(72) Erfinder: Vorbeck, Sascha, Dipl.-Ing., 64347 Griesheim (DE); Mattheus, Arnold, Dr. rer. nat., 64295 Darmstadt (DE)
(74) Vertreter: Blumbach - Zinngrebe

(56) Entgegenhaltungen:
- EP-A- 1 077 385
- EP-A2- 1 251 378
- WO-A-2004/072988
- WO-A2-03/044585
- DE-A1- 3 812 143
- DE-B3- 10 321 756
- DE-C1- 4 441 599
- US-A- 4 880 484
- US-A- 5 671 308
- US-A- 5 729 966
- US-B1- 6 293 081
- US-B1- 6 480 635

## Beschreibung

Die Erfindung betrifft allgemein ein Verfahren zum Markieren von Leitungen sowie entsprechend markierte Leitungen.

Mit zunehmender Komplexität der Ielekommunikations-Infrastruktur, insbesondere seit Einführung von Glasfasern, welche zu Bündeln mit hoher Faseranzahl zusammengefasst werden können, spielt eine eindeutige Markierung von Kabeln und Leitungen eine immer grössere Rolle.

Es sind verschiedene Methoden zur Kennzeichnung von Kabeln bekannt. Aus der Offenlegungsschrift DE 33 00 908 A1 ist beispielsweise ein markierungssystem für Kabel und Leitungen bekannt, welches das Aufstecken von Reitern vorsieht, welche eine Beschriftung sowie eine farbliche Markierung aufweisen.

Aus der DE 691 12 757 T2 ist ein Verfahren zum Kennzeichnen von elektrischen Kabeln bekannt, bei welchem eine Markierung dadurch auf das Kabel gebracht wird, dass mittels eines Lasers die obere Schicht einer auf das Kabel aufgebrachten zweischichtigen Lackierung angeschmolzen wird.

In EP 1 251 378 A2 wird ein Herstellungsverfahren für optische Faserkabel beschrieben, bei dem die Fasern eines Faserbündels segmentweise zusammengesetzt werden, wobei die chromatische Dispersion der einzelnen Fasern des jeweiligen Segments gemessen wird, die Fasern nach chromatischer Dispersion sortiert und farblich markiert werden, und wobei die farbliche Markierung dabei derart erfolgt, dass bei Verbinden gleicher Markierungen die Fasern eines ersten Segments mit aufsteigender chromatischer Dispersion mit Fasern eines zweiten Segments mit absteigender Dispersion verbunden werden, so dass eine einheitliche chromatische Dispersion der Fasern des Faserbündels erzielt wird. Aus WO 03/044585 A2 ist ein ähnliches Verfahren bekannt, bei dem die chromatische Dispersion optischer Fasern gemessen wird und die Fasern in Abhängigkeit ihrer chromatischen Dispersion in Untergruppen sortiert und farblich markiert werden.

Für Glasfasern ist ein standardisiertes Farbmarkierungssystem aus DIN VDE 0888 bekannt. Nach dem Ziehprozess sind die Glasfasern farblos und unmarkiert. Bevor die einzelnen Fasern verkabelt werden, erfolgt eine farbliche Markierung. Die Hersteller halten sich dabei in der Regel an die Farbgebung, wie sie in der DIN VDE 0888 vorgesehen ist.

In der DIN VDE 0888 sind jedoch lediglich 12 unterschiedliche Farben für die Markierung der Glasfasern vorgesehen. Bei Kabeln mit mehr als 12 Fasern werden die Fasern in Bündeladern gruppiert. Die Bündeladern sind ebenfalls mit einem farblich gekennzeichneten Mantel umgeben. Bei einer größeren Anzahl von Glasfasern pro Kabel ist die Farbgebung nicht eindeutig geregelt und die Hersteller behelfen sich mit gestreiften Glasfasern oder schwarzen Ringen.

Eine farbliche Kennzeichnung kann jedoch leicht zu Verwechslungen führen und ist daher lediglich zur Unterstützung und nicht zu einer eindeutigen Identifizierung der Glasfaser geeignet. Darüber hinaus ist bei der Farbgebung der einzelnen Glasfasern keine Unterscheidung der unterschiedlichen Fasertypen vorgesehen, was gerade bei hybriden Glasfaserkabeln mit mehreren unterschiedlichen Glasfasertypen innerhalb eines Kabels leicht zu Verwechslungen führen kann.

Entsprechend der DIN VDE 0888 enthalten die Kabel weiterhin einen Kennfaden als Warenzeichen des Herstellers und eine fortlaufende Kennzeichnung auf dem Kabelmantel mit den wichtigsten Kabelparametern. Der große Nachteil bei der Kennzeichnung auf dem Kabelmantel besteht darin, dass einige wichtige Faserparameter ausgeschlossen werden und diese Kennzeichnung nur bei Kabeln angewandt werden kann, welche einen einzigen Fasertyp enthalten.

Eine weitere Möglichkeit der Markierung von Glasfasern und Glasfaserkabeln, auch nach der Produktion und Verlegung der Kabel, besteht in der Markierung durch selbstklebende Markierstreifen und Schnapptüllen. Auf diese Weise können auch Pigtails markiert werden. Ein Pigtail ist eine mit einem Stecker versehene Faser, welche mit dem Verlegekabel verspleisst wird.

Eine Markierung der Glasfaser durch Markierstreifen oder Schnapptüllen birgt jedoch den Nachteil, dass die manuelle Beschriftung zum einen nicht standardisiert ist und zum anderen unlesbar sein oder werden kann.

Der Erfindung liegt daher die Aufgabe zugrunde, einen verbesserten Weg aufzuzeigen, wie Leitungen, insbesondere optische Fasern, eindeutig und bleibend markiert werden können, wobei die Markierung einen Informationsgehalt aufweist, welcher insbesondere Informationen über physikalische Eigenschaften der Leitung umfasst.

Diese Aufgabe wird durch ein Verfahren gemäß Anspruch 1 gelöst. Vorteilhafte Ausführungsformen und Weiterbildungen sind in den jeweiligen Unteransprüchen umschrieben.

Dementsprechend umfasst ein erfindungsgemäßes Verfahren zur Kennzeichnung von optischen Leitern das Messen zumindest einer physikalischen Eigenschaft zumindest eines optischen Leiters, das Erzeugen kodierter Informationen in Abhängigkeit des gemessenen Wertes der zumindest einen physikalischen Eigenschaft entsprechend eines vorgegebenen Kodieralgorithmus, und das Markieren des zumindest einen optischen Leiters, wobei die kodierten Informationen aus der Markierung auslesbar sind.

Beispiele entsprechender messbarer physikalischer Eigenschaften sind Dämpfung, chromatische Dispersion oder Polarisationsmodendispersion einer Glasfaser. Zusätzlich können weitere Informationen wie zum Beispiel Herstellerfirma, Produktionsdatum oder Leitungstyp, beispielsweise Typ der optischen Faser, ebenfalls als kodierte Informationen in der Markierung hinterlegt sein.

Optische Leiter umfassen beispielsweise Glasfasern, polymeroptische Fasern (POF), Kupferkabel, sowie Bündeladern oder Kabel, welche die genannten Leitertypen aufweisen.

Der Adressierungsraum und der Informationsgehalt der kodierten Informationen ist im Prinzip unbegrenzt. In der Praxis hat die Kodierung jedoch eine begrenzte Länge bzw. Größe, wodurch die maximal mögliche Anzahl unterschiedlicher Markierungen nach oben begrenzt ist. Es ist möglich, für die jeweilige Anwendung diese Obergrenze an unterschiedlichen Markierungsmöglichkeiten sinnvoll zu wählen, so dass insbesondere jeder zu markierende Leiter mit einer eindeutigen Markierung versehen werden kann.

Besonders vorteilhaft umfasst die zumindest eine physikalische Eigenschaft eine Eigenschaft, welche erst nach Verlegen des Leiters bestimmbar ist. Dies kann beispielsweise die erst nach dem Verlegen bekannte Länge des verlegten Leiters sein.

Bestimmte physikalische Eigenschaften eines Leiters, wie beispielsweise die Polarisationsmodendispersion (PMD) einer optischen Faser, verändern sich bei Lageänderung des Leiters oder bei Beaufschlagung des Leiters mit einer mechanischen Spannung. Dementsprechend umfasst das Verfahren vorteilhaft das Messen einer physikalischen Eigenschaft, welche sich bei Lageänderung oder bei mechanischer Belastung des Leiters verändert. Vorteilhaft kann das Verfahren außerdem das Messen einer sich zeitlich ändernden Eigenschaft umfassen.

Die Erfindung sieht für das Markieren des Leiters verschiedene Varianten vor. Eine erste Variante umfasst das Aufbringen einer visuellen Markierung, insbesondere eines Strichcodes, an dem zumindest einen Leiter oder dessen Ummantelung.

Eine Beschriftung einer Glasfaser oder eines Kabels mit einem Strichcode ist eindeutig, maschinenlesbar und ermöglicht eine Beschriftung mit allen relevanten Parametern. Ein Strichcode kann beispielsweise durch Befestigen eines Aufklebers auf den Leiter aufgebracht werden. Die Verwendung von Schnapptüllen zusammen mit einem Strichcode ermöglicht zudem eine einfache Aktualisierung von veränderlichen Parametern, wie beispielsweise Dämpfung oder PMD sowie die Beschriftung von Pigtails. Für das Auslesen des Strichcodes können entsprechende handelsübliche Lesegeräte verwendet werden.

Eine vorteilhafte Weiterbildung dieser Markierung ist das wiederholte Aufbringen beispielsweise eines Strichcodes in ausreichend kleinen Abständen, wodurch die Markierung auch bei typischen Arbeiten mit dem Leiter, wie beispielsweise Aufwickeln, Verlegen oder Verkürzen erhalten wird und zugänglich bleibt.

Ferner liegt auch das Aufbringen einer Markierung im Rahmen der Erfindung, welche verschiedenartige Kreise oder Ringe, ähnlich der Markierung von Widerständen, umfasst.

Eine weitere vorteilhafte Variante des Markierens besteht darin, an dem Leiter eine Einrichtung anzubringen, welche einen digitalen Datenspeicher umfasst, und die kodierten Informationen in diesem Datenspeicher zu speichern.

Eine besonders bevorzugte Abwandlung dieser Variante besteht darin, die Einrichtung zusätzlich mit einer Sende- und Empfangseinrichtung, beispielsweise in Form eines Transponders, auszustatten. Durch den Einsatz eines Transponders, welcher in Ansprechen auf ein Abfragesignal ein kodiertes, selektiv für den Abfragenden bestimmtes Antwortsignal mit den gewünschten Informationen aussenden kann, wird ein Auslesen der gespeicherten digitalen Informationen ohne einen mechanischen Kontakt ermöglicht.

Eine speziell für optische Leiter, insbesondere optische Fasern, einsetzbare Variante des Markierens umfasst das Einprägen einer optisch abtastbaren Strukturierung in oder auf dem optischen Leiter. Besonders vorteilhaft umfasst die Strukturierung ein optisches Gitter, insbesondere ein Bragg-Gitter.

Zum Erzeugen eines Bragg-Gitters kann beispielsweise die Struktur des Leitermaterials mittels Lasereinstrahlung gezielt verändert werden, wodurch Zonen mit unterschiedlichen Brechungsindizes entstehen. Ein Bragg-Gitter wirkt als Beugungsgitter, welches bei einer bestimmten Wellenlänge reflektiert und somit als Informationsspeicher dienen kann. Die kodierten Informationen können durch ein optisches Signal bei der Reflektionswellenlänge ausgelesen werden.

Der optische Leiter kann beispielsweise als Wellenleiter ausgebildet sein. Insbesondere kann der optische Leiter auch eine optische Faser umfassen, welche beispielsweise als Glasfaser oder als polymeroptische Faser ausgebildet ist.

Insbesondere bei hybriden Kabeln, welche mehrere unterschiedliche Fasertypen beinhalten, ist diese Variante der Markierung, bei welcher beispielsweise die Faserparameter direkt auf der Faser hinterlegt werden, besonders vorteilhaft.

Die beschriebene Markierung optischer Leiter ist besonders vorteilhaft anwendbar in optischen Netzen, beispielsweise nach GMPLS-Standard.

Weitere Varianten der Markierung umfassen eine mechanische Markierung, zum Beispiel durch Überstülpen einer Hülse oder Befestigen eines Steckers mit einer eindeutigen mechanischen Beschaffenheit nach dem Prinzip eines Schlüssels, oder eine elektrische Markierung, zum Beispiel durch Befestigen eines Drahtes an dem Leiter und Beschalten mit einem elektrischen Code-Signal.

Das Verfahren umfasst ferner vorteilhaft das nachträgliche Überschreiben und/oder Ergänzen des Informationsgehalts der in der Markierung hinterlegten kodierten Informationen.

Dies ist besonders vorteilhaft zum Hinterlegen von veränderlichen Eigenschaften des Leiters. Eine Aktualisierung von veränderlichen Eigenschaften kann beispielsweise mit Hilfe von Schnapptüllen erfolgen.

Sollte der Leiter bereits eine Markierung enthalten, die nicht oder nur sehr schwer entfernt werden kann, kann eine zweite Markierung auf den Leiter aufgebracht werden, zum Beispiel in Form eines Aufklebers mit einem Strichcode. Diese zweite Markierung enthält vorteilhaft die ursprünglich kodierten Informationen, erweitert um die neu zu hinterlegenden Informationen. Solche Strichcodeaufkleber können mit handelsüblichen, mobilen Schreibgeräten produziert werden.

Ferner umfasst die Erfindung einen optischen Leiter, insbesondere eine optische Faser, welcher eine optisch abtastbare Strukturierung aufweist, wobei aus der Strukturierung kodierte Informationen über zumindest eine physikalische Eigenschaft des optischen Leiters auslesbar sind. Besonders vorteilhaft ist die Strukturierung als optisches Gitter, insbesondere als Bragg-Gitter ausgebildet.

Die Erfindung umfasst weiterhin einen optischen Leiter, welcher eine Einrichtung mit einem digitalen Datenspeicher umfasst, in welchem kodierte Informationen über zumindest eine physikalische Eigenschaft des Leiters gespeichert sind.

Vorteilhaft umfasst die Einrichtung außerdem eine Sende- und Empfangseinrichtung, insbesondere nach Art eines Transponders.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

Es zeigen:
- Fig. 1: eine schematische Darstellung einer bevorzugten Ausführungsform eines erfindungsgemäßen optischen Leiters, und
- Fig. 2: eine schematische Darstellung einer Ausführungsform eines elektrischen Kabels.

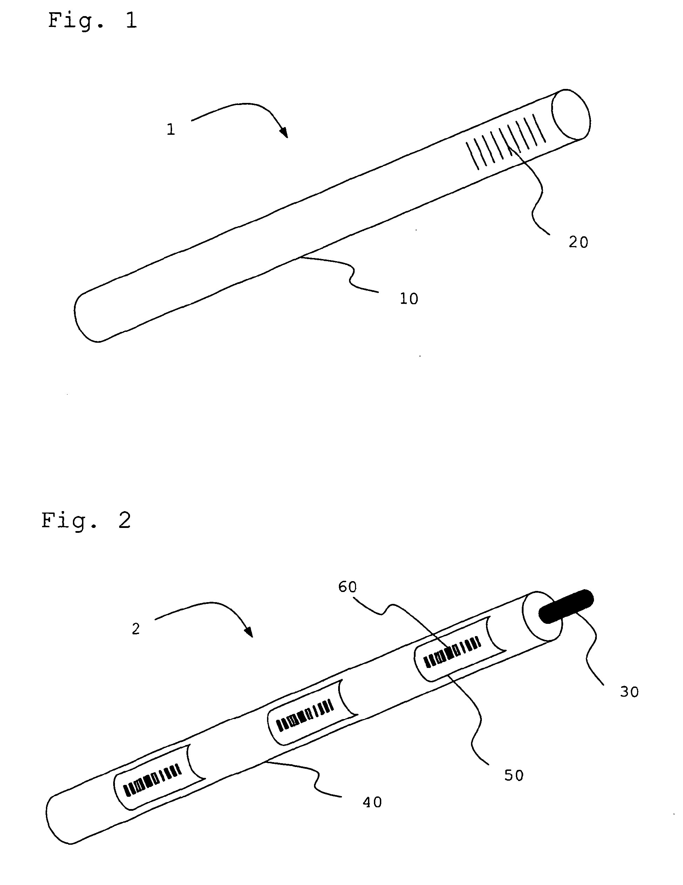

Fig. 1 zeigt einen erfindungsgemäßen optischen Leiter 1, umfassend eine optische Faser 10. Die optische Faser 10 kann beispielsweise als Glasfaser oder als polymeroptische Faser ausgebildet sein. In die optische Faser 10 ist ein Bragg-Gitter 20 (FBG - Fiber Bragg Grating) mittels Laserbestrahlung eingeprägt. Kodiert in dem Bragg-Gitter 20 sind Informationen über physikalische Eigenschaften des optischen Leiters 1, welche mittels optischer Abtastung des Bragg-Gitters 20 wieder ausgelesen werden können.

Fig. 2 zeigt ein elektrisches Kabel 2, welches eine Kupferleitung 30 umfasst, die zur elektrischen Isolierung von einer Ummantelung 40 umgeben ist. Bestimmte physikalische Eigenschaften des Kabels, wie beispielsweise die Länge des Kabels nach Verlegen, sind als kodierte Informationen in einem Strichcode 60 enthalten, welcher mittels eines Aufklebers 50 auf der Ummantelung 40 aufgebracht ist.

Damit die Markierung auch bei typischen Arbeiten mit dem Kabel, wie beispielsweise Aufwickeln, Verlegen oder Verkürzen, erhalten und zugänglich bleibt, sind in dieser Ausführungsform eine Vielzahl in ausreichend kleinen Anständen aufgebrachte Aufkleber 50, jeweils mit Strichcode 60, vorgesehen.

## Patentansprüche

1. Verfahren zur Kennzeichnung von optischen Leitern mit den Schritten
- Messen zumindest einer der physikalischen Eigenschaften Dämpfung, chromatische Dispersion oder Polarisationsmodendispersion einer Glasfaser zumindest eines optischen Leiters,
- Erzeugen kodierter Informationen in Abhängigkeit des gemessenen Wertes der zumindest einen physikalischen Eigenschaft entsprechend eines vorgegebenen Kodieralgorithmus, und
- Markieren des zumindest einen optischen Leiters, wobei die kodierten Informationen aus der Markierung auslesbar sind
**dadurch gekennzeichnet dass**,
das Markieren das Anbringen einer Einrichtung an dem zumindest einen Leiter umfasst, welche einen digitalen Datenspeicher umfasst.

2. Verfahren nach Anspruch 1, wobei die Einrichtung eine Sende- und Empfangseinrichtung umfasst.

3. Verfahren nach einem der vorstehenden Ansprüche, wobei die zumindest eine physikalische Eigenschaft eine Eigenschaft umfasst, welche erst nach Verlegen des Leiters bestimmt wird, insbesondere die Länge des verlegten Leiters.

4. Verfahren nach einem der vorstehenden Ansprüche, wobei die zumindest eine physikalische Eigenschaft eine Eigenschaft umfasst, welche sich bei Lageänderung oder bei mechanischer Belastung des Leiters verändert.

5. Verfahren zur Kennzeichnung von optischen Leitern mit den Schritten
- Messen zumindest einer der physikalischen Eigenschaften Dämpfung, chromatische Dispersion oder Polarisationsmodendispersion einer Glasfaser zumindest eines optischen Leiters,
- Erzeugen kodierter Informationen in Abhängigkeit des gemessenen Wertes der zumindest einen physikalischen Eigenschaft entsprechend eines vorgegebenen Kodieralgorithmus, und
- Markieren des zumindest einen optischen Leiters, wobei die kodierten Informationen aus der Markierung auslesbar sind
**dadurch gekennzeichnet dass**,
das Markieren das Aufbringen eines Aufklebers mit einem Strichcode an dem zumindest einen Leiter oder dessen Ummantelung umfasst.

6. Verfahren nach Anspruch 5, wobei die zumindest eine physikalische Eigenschaft eine Eigenschaft umfasst, welche erst nach Verlegen des Leiters bestimmt wird, insbesondere die Länge des verlegten Leiters.

7. Verfahren nach Anspruch 5 oder 6, wobei die zumindest eine physikalische Eigenschaft eine Eigenschaft umfasst, welche sich bei Lageänderung oder bei mechanischer Belastung des Leiters verändert.

8. Verfahren zur Kennzeichnung von optischen Leitern mit den Schritten
- Messen zumindest einer der physikalischen Eigenschaften Dämpfung, chromatische Dispersion oder Polarisationsmodendispersion einer Glasfaser zumindest eines optischen Leiters,
- Erzeugen kodierter Informationen in Abhängigkeit des gemessenen Wertes der zumindest einen physikalischen Eigenschaft entsprechend eines vorgegebenen Kodieralgorithmus, und
- Markieren des zumindest einen optischen Leiters, wobei die kodierten Informationen aus der Markierung auslesbar sind
**dadurch gekennzeichnet dass**,
das Markieren das Einprägen einer optisch abtastbaren Strukturierung in oder auf dem zumindest einen optischen Leiter umfasst.

9. Verfahren nach Anspruch 8, wobei die Strukturierung als optisches Gitter, insbesondere als Bragg-Gitter, ausgebildet ist.

10. Verfahren nach Anspruch 8 oder 9, wobei die zumindest eine physikalische Eigenschaft eine Eigenschaft umfasst, welche erst nach Verlegen des Leiters bestimmt wird, insbesondere die Länge des verlegten Leiters.

11. Verfahren nach Anspruch 8, 9 oder 10, wobei die zumindest eine physikalische Eigenschaft eine Eigenschaft umfasst, welche sich bei Lageänderung oder bei mechanischer Belastung des Leiters verändert.

## Claims

1. A method for the marking of optical conductors, the method comprising the steps of
- measuring at least one of the physical characteristics attenuation, chromatic dispersion or polarisation mode dispersion of a glass fiber of at least one optical conductor,
- generating coded information depending on the measured value of the at least one physical characteristic according to a predetermined coding algorithm, and
- marking the at least one optical conductor, wherein the coded information can be read out from the marking,
**characterised in that**
the marking includes the attachment of a device comprising a digital data storage on the at least one conductor.

2. The method according to claim 1, wherein the device includes a transmitting and receiving device.

3. The method according to any one of the preceding claims, wherein the at least one physical characteristic comprises a characteristic that is determined after installation of the conductor, in particular the length of the installed conductor.

4. The method according to any one of the preceding claims, wherein the at least one physical characteristic comprises a characteristic which changes with a change of position or mechanical stressing of the conductor.

5. A method for the marking of optical conductors, the method comprising the steps of
- measuring at least one of the physical characteristics attenuation, chromatic dispersion or polarisation mode dispersion of a glass fiber of at least one optical conductor,
- generating coded information depending on the measured value of the at least one physical characteristic according to a predetermined coding algorithm, and
- marking the at least one optical conductor, wherein the coded information can be read out from the marking,
**characterised in that**
the marking comprises the application of an adhesive label with a barcode onto the at least one conductor or its sheathing.

6. The method according to claim 5, wherein the at least one physical characteristic comprises a characteristic that is determined after installation of the conductor, in particular the length of the installed conductor.

7. The method according to claim 5 or 6, wherein the at least one physical characteristic comprises a characteristic that changes with a change of position or mechanical stressing of the conductor.

8. A method for the marking of optical conductors, the method comprising the steps of
- measuring at least one of the physical characteristics attenuation, chromatic dispersion or polarisation mode dispersion of a glass fiber of at least one optical conductor,
- generating coded information depending on the measured value of the at least one physical characteristic according to a predetermined coding algorithm, and
- marking the at least one optical conductor, wherein the coded information can be read out from the marking,
**characterized in that**
the marking comprises the engraving of an optically scannable patterning into or onto the at least one optical conductor.

9. The method according to claim 8, wherein the patterning is embodied as an optical grid, in particular a Bragg grid.

10. The method according to claim 8 or 9, wherein the at least one physical characteristic comprises a characteristic that is determined after installation of the conductor, in particular the length of the installed conductor.

11. The method according to claim 8, 9 or 10, wherein the at least one physical characteristic comprises a characteristic that changes with a change of position or mechanical stressing of the conductor.

## Revendications

1. Procédé de marquage de conducteurs optiques comprenant les étapes
- mesure d'au moins une des propriétés physiques amortissement, dispersion chromatique ou dispersion modale de polarisation d'une fibre optique d'au moins un conducteur optique,
- génération d'informations codées en fonction de la valeur mesurée de la au moins une propriété physique selon un algorithme de codage prédéfini et
- marquage du au moins un conducteur optique, les informations codées pouvant être extraites du marquage,
**caractérisé en ce que**
le marquage comprend le montage sur le au moins un conducteur d'un dispositif qui comprend une mémoire de données numérique.

2. Procédé selon la revendication 1, dans lequel le dispositif comprend un dispositif d'émission et de réception.

3. Procédé selon l'une des revendications précédentes, dans lequel la au moins une propriété physique comprend une propriété qui ne peut être définie qu'après la pose du conducteur, notamment la longueur du conducteur posé.

4. Procédé selon l'une des revendications précédentes, dans lequel la au moins une propriété physique comprend une propriété qui varie en cas de changement de position du conducteur ou de contrainte mécanique exercée sur le conducteur.

5. Procédé de marquage de conducteurs optiques comprenant les étapes
- mesure d'au moins une des propriétés physiques amortissement, dispersion chromatique ou dispersion modale de polarisation d'une fibre optique d'au moins un conducteur optique,
- génération d'informations codées en fonction de la valeur mesurée de la au moins une propriété physique selon un algorithme de codage prédéfini et
- marquage du au moins un conducteur optique, les informations codées pouvant être extraites du marquage,
**caractérisé en ce que**
le marquage comprend l'application d'un autocollant avec un code barre sur le au moins un conducteur ou sa gaine.

6. Procédé selon la revendication 5, dans lequel la au moins une propriété physique comprend une propriété qui ne peut être définie qu'après la pose du conducteur, notamment la longueur du conducteur posé.

7. Procédé selon la revendication 5 ou 6, dans lequel la au moins une propriété physique comprend une propriété qui varie en cas de changement de position du conducteur ou de contrainte mécanique exercée sur le conducteur.

8. Procédé de marquage de conducteurs optiques comprenant les étapes
- mesure d'au moins une des propriétés physiques amortissement, dispersion chromatique ou dispersion modale de polarisation d'une fibre optique d'au moins un conducteur optique,
- génération d'informations codées en fonction de la valeur mesurée de la au moins une propriété physique selon un algorithme de codage prédéfini et
- marquage du au moins un conducteur optique, les informations codées pouvant être extraites du marquage,
**caractérisé en ce que**
le marquage comprend la gravure d'une structure apte à être balayée optiquement dans ou sur le au moins un conducteur optique.

9. Procédé selon la revendication 8, dans lequel la structure est conçue comme une grille optique, notamment comme une grille de Bragg.

10. Procédé selon la revendication 8 ou 9, dans lequel la au moins une propriété physique comprend une propriété qui ne peut être définie qu'après la pose du conducteur, notamment la longueur du conducteur posé.

11. Procédé selon la revendication 8, 9 ou 10, dans lequel la au moins une propriété physique comprend une propriété qui varie en cas de changement de position du conducteur ou de contrainte mécanique exercée sur le conducteur.
